# EUROPÄISCHE PATENTSCHRIFT

(11) **EP 1 469 229 B1**
(45) Veröffentlichungstag und Bekanntmachung des Hinweises auf die Patenterteilung: **27.02.2008**
(21) Anmeldenummer: 03101067.1
(22) Anmeldetag: 17.04.2003
(51) Int. Cl.: F16H 3/00

(54) **Automatisiertes Zahnradgetriebe**
Robotised gearbox
Transmission robotisée à engrenages

(43) Veröffentlichungstag der Anmeldung: 20.10.2004
(73) Patentinhaber: Getrag Ford Transmissions GmbH, 50725 Köln (DE)
(72) Erfinder: Loerken, Markus, 42399, Wuppertal (DE)
(74) Vertreter: Drömer, Hans-Carsten

(56) Entgegenhaltungen:
- DE-A- 19 944 879
- PATENT ABSTRACTS OF JAPAN vol. 2000, no. 05, 14. September 2000 (2000-09-14) -& JP 2000 046127 A (AICHI MACH IND CO LTD;NISSAN MOTOR CO LTD), 18. Februar 2000 (2000-02-18)
- PATENT ABSTRACTS OF JAPAN vol. 015, no. 314 (M-1145), 12. August 1991 (1991-08-12) -& JP 03 117750 A (AISIN SEIKI CO LTD), 20. Mai 1991 (1991-05-20)
- PATENT ABSTRACTS OF JAPAN vol. 014, no. 536 (M-1052), 27. November 1990 (1990-11-27) -& JP 02 225844 A (TOYOTA MOTOR CORP), 7. September 1990 (1990-09-07)

## Beschreibung

Die Erfindung bezieht sich auf ein automatisiertes Zahnradgetriebe, insbesondere Doppelkupplungsgetriebe für ein Fahrzeug, insbesondere für ein Kraftfahrzeug, mit zwei im wesentlichen konzentrisch zueinander angeordneten Eingangswellen und einer Abtriebswelle, wobei die erste Eingangswelle als Vollwelle und die zweite Eingangswelle als Hohlwelle ausgebildet ist und die erste Eingangswelle bereichsweise innerhalb der zweiten Eingangswelle angeordnet ist, wobei die erste und die zweite Eingangswelle jeweils über eine erste und eine zweite Kupplung mit einer Antriebswelle verbindbar sind und die erste Eingangswelle zumindest über ein erstes Zahnradpaar mit der Abtriebswelle und die zweite Eingangswelle zumindest über ein zweites Zahnradpaar mit der Abtriebswelle in Wirkverbindung bringbar ist, und wobei zur Realisierung eines Rückwärtsganges eine separate Nebenwelle vorgesehen ist.

Aus dem Stand der Technik sind verschiedene automatisierte Zahnradgetriebe, insbesondere Doppelkupplungsgetriebe z.B. für Fahrzeuge bekannt. Dabei weisen eine Vielzahl von Ausführungsformen, die zwei z.B. im wesentlichen konzentrisch zueinander angeordnete Eingangswellen aufweisen, zwei Abtriebswellen für den Fahrzeugantrieb auf. Zur Vereinfachung der konstruktiven Ausgestaltung und zur Reduzierung des Getriebebauraumes ist es aber auch bekannt, bei einer Ausführungsform mit zwei im wesentlichen konzentrisch zueinander angeordneten Eingangswellen nur eine Abtriebwelle vorzusehen, z.B. aus der DE 199 44 879 A1, die als nächstliegender Stand der Technik angesehen wird. Es offenbart diese Druckschrift ein Doppelkupplungsgetriebe für ein Kraftfahrzeug, mit zwei konzentrisch zueinander angeordneten Eingangswellen und einer Abtriebswelle, wobei die erste und die zweite Eingangswelle jeweils über ei ne erste und eine zweite Kupplung mit einer Antriebswelle verbindbar sind und die erste Eingangswelle zumindest über ein erstes Zahnradpaar mit der Abtriebswelle und die zweite Eingangswelle zumindest über ein zweites Zahnradpaar mit der Abtriebswelle wirksam verbindbar ist. Es ist dabei zur vorteilhaften Realisierung einer kompakten Bauweise für einen Front- Längs- Einbau in den Motorraum eines Kraftfahrzeuges vorgesehen, daß die erste Eingangswelle als Vollwelle und die zweite Eingangswelle als Hohlwelle ausgebildet ist und die erste Eingangswelle innerhalb der zweiten Eingangswelle angeordnet ist, daß die Eingangswellen und die Abtriebswelle im wesentlichen parallel zur Fahrzeuglängsrichtung und die erste und zweite Kupplung radial zueinander angeordnet sind. Es sind dabei bei einer Ausführungsform sieben Vorwärtsgänge vorgesehen, weiterhin ist bevorzugt zur Realisierung eines Rückwärtsganges eine separate Nebenwelle vorgesehen. Gemäß weiteren Ausgestaltungsmerkmalen weist die erste Eingangswelle aufeinanderfolgend die jeweiligen Zahnräder für die siebte, die fünfte, die dritte und die erste Gangstufe auf, weiterhin kann die zweite Eingangswelle aufeinanderfolgend die jeweiligen Zahnräder für die zweite, vierte und sechste Gangstufe aufweisen. Dabei ist vorgesehen, daß für die erste und dritte Gangstufe sowie für die vierte und sechste, die fünfte und siebte sowie die zweite Gangstufe und die Rückwärtsgangstufe jeweils eine gemeinsame Schiebemuffe vorgesehen ist, welche die genannten Gänge wahlweise schaltet. Dadurch soll eine besonders kompakte Bauweise des Doppelkupplungsgetriebes realisiert werden. Die beiden Kupplungen können als Lamellenkupplungen ausgeführt sein, wodurch eine kompakte Radialkupplung mit einem Kupplungsgehäuse ausgeführt sei. Dabei kann, je nach dem wie die Kupplungen geschaltet sind, die radial innen liegende oder die radial außen liegende Kupplung als Anfahrkupplung ausgebildet sein.

Durch ein derart ausgebildetes Doppelkupplungsgetriebe soll einerseits eine kompakte Bauweise des Doppelkupplungsgetriebes in einem Front- Längs- Einbau in den Motorraum eines Kraftfahrzeuges möglich sein, da die erste Eingangswelle als Vollwelle und die zweite Eingangswelle als Hohlwelle ausgebildet ist und entsprechend ineinander angeordnet sind. Des weiteren sei nur eine Abtriebswelle vorgesehen, die ebenfalls wie die Eingangswellen in Fahrzeuglängsrichtung angeordnet seien. Entscheidend sei außerdem, daß die notwendigerweise vorzusehenden Kupplungen radial und nicht mehr sequentiell zueinander angeordnet seien, was den erforderlichen Bauraum in Fahrzeuglängsrichtung minimiere. Im Ergebnis soll durch diese Anordnung ein sehr kompaktes Doppelkupplungsgetriebe für ein Kraftfahrzeug auf kostengünstige Art und Weise geschaffen sein, das sich besonders für den Front- Längs - Einbau in einen Motorraum eigne, sowie auch einen hohen Wirkungsgrad, eine geringe Baugröße und geringes Gewicht aufweise und dennoch lediglich niedrige Herstellungskosten erfordere.

Nachteilig ist bei dieser bekannten Ausführungsform eines Doppelkupplungsgetriebes für ein Kraftfahrzeug insbesondere, daß die konstruktive Integration des Rückwärtsganges in das Getriebe verbesserungswürdig ist, so kommt es bei den bekannten Ausführungsformen aufgrund der festgelegten Gangpositionen bei der Integration des Rückwärtsganges regelmäßig zu Überscheidungen der einzelnen Gangräder. So kann aufgrund der festgelegten Gangpositionen z.B. in einem zwei Wellen- Power- Shift- Getriebe ein "normaler" Rückwärtsgang z.B. über ein axial verschiebbares Schieberad nicht ohne Überschneidungen und/oder schlechter Übersetzung der einzelnen Gangräder und nicht ohne eine Beeinträchtigung des Getriebebauraumes realisiert werden.

Ausgehend von diesen bekannten automatisierten Zahnradgetrieben, insbesondere Doppelkupplungsgetrieben z.B. für Fahrzeuge liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei insbesondere die konstruktive Integration des Rückwärtsganges in das Getriebe dahingehend verbessert werden soll, das es zu keinen Überschneidungen der einzelnen Gangräder mehr kommt, wobei die gewünschte Anordnung auch hinsichtlich der Übersetzung der einzelnen Gangräder und hinsichtlich des Getriebebauraumes den Anforderungen genügen bzw. verbessert sein soll. Die gewünschte Anordnung soll dabei auch hinsichtlich der Lebensdauer und der Zuverlässigkeit verbessert sein, weiterhin soll die gewünschte Anordnung einfach und kostengünstig herstellbar sein.

Diese Aufgabe wird erfindungsgemäß dadurch gelöst, daß zur Drehmomentenübertragung auf die Nebenwelle ein auf dieser zur Realisierung eines Rückwärtsganges vorgesehenen separaten Nebenwelle befindliches Zahnrad mit einem auf der als Hohlwelle ausgebildeten zweiten Eingangswelle befindlichen Zahnrad in Wirkverbindung bringbar ist, daß zur Drehrichtungsumkehr für den Rückwärtsgang auf der Nebenwelle ein Planetenradsatz angeordnet ist, daß das äußere Zentralrad des auf der Nebenwelle angeordneten Planetenradsatzes zur Drehmomentenübertragung auf die Abtriebswelle mit einem auf der als Vollwelle ausgebildeten ersten Eingangswelle befindlichen Zahnrad in Wirkverbindung bringbar ist, und daß die Schaltung des Rückwärtsganges über den Steg des Planetenradsatzes auf der Nebenwelle erfolgt. Auf diese Weise wird erstmalig mit einfachen Mitteln die Möglichkeit geschaffen, den Rückwärtsgang derart in ein Getriebe zu integrieren, daß es zu keinen Überschneidungen der einzelnen Gangräder mehr kommt, wobei die erfindungsgemäße Anordnung auch hinsichtlich der Übersetzung der einzelnen Gangräder und hinsichtlich des Getriebebauraumes den Anforderungen vollkommen genügt bzw. verbessert ist. Es kann dadurch, daß der Rückwärtsgang nur mit den Eingangswellen kämmt, dieser Rückwärtsgang auf einem Winkel mit annähernd 180° um die Eingangswellen herum positioniert werden. Das bedeutet, daß nur ein Achsabstand (Rückwärtsgang <==> Eingangswelle) die Übersetzung der beiden Rückwärtsgangräder mit bestimmt, welche z.B. bevorzugt mit dem Festrad des 3. und 4. Ganges wälzen. Dies hat auch insbesondere den Vorteil weniger Abhängigkeiten zwischen Übersetzung, Achsabstand und Wälzkreisradius. Die erfindungsgemäße Anordnung ist also insbesondere hinsichtlich ihrer Integrierbarkeit in das Getriebe verbessert worden, weiterhin ist diese aber auch hinsichtlich der Lebensdauer und der Zuverlässigkeit verbessert worden und außerdem einfach und kostengünstig herstellbar.

Bei der bevorzugten Ausführungsform der vorliegenden Erfindung ist das auf der Nebenwelle befindliche, mit dem auf der als Hohlwelle ausgebildeten zweiten Eingangswelle befindlichen Zahnrad in Wirkverbindung bringbare Zahnrad als Festrad ausgebildet. Dabei empfiehlt es sich, daß das zur Drehmomentenübertragung auf die Nebenwelle mit dem auf der Nebenwelle befindlichen Zahnrad in Wirkverbindung bringbare, auf der als Hohlwelle ausgebildeten zweiten Eingangswelle befindliche Zahnrad das Zahnrad für den 4. Gang ist. Es wird also hier in einfacher Weise über den 4. Gang der Eingangs-Hohlwelle das Drehmoment zum Rückwärtsfahren auf das festsitzende Gangrad des Rückwärtsganges auf der Nebenwelle übertragen. Über den auf der Nebenwelle angeordneten Planetenradsatz erfolgt dann eine Drehrichtungsumkehr sowie die notwendige Übersetzung.

Bei einer alternativen Ausführungsform der vorliegenden Erfindung ist das zur Drehmomentenübertragung auf die Nebenwelle mit dem auf der Nebenwelle befindlichen Zahnrad in Wirkverbindung bringbare, auf der als Hohlwelle ausgebildeten zweiten Eingangswelle befindliche Zahnrad das Zahnrad für den 6. Gang.

Nach einem weiteren bevorzugten Ausgestaltungsmerkmal der vorliegenden Erfindung empfiehlt es sich, daß das mit dem äußeren Zentralrad des auf der Nebenwelle angeordneten Planetenradsatzes zur Drehmomentenübertragung auf die Abtriebswelle in Wirkverbindung bringbare, auf der als Vollwelle ausgebildeten ersten Eingangswelle befindliche Zahnrad das Zahnrad für den 3. Gang ist. Es wird also hier über das äußere Zentralrad und über das 3. Gangrad der Eingangsvollwelle des geschalteten 3. Ganges das Drehmoment auf die Ausgangswelle übertragen. Dabei wird durch die geöffnete Kupplung das 3. Gangrad der Eingangsvollwelle zu einem Losrad, welches eben zur Drehmomentenübertragung für den Rückwärtsgang dient. Dabei muß der 3. Gang zum Übertragen des Drehmomentes geschaltet sein.

Bei einer dazu alternativen Ausführungsform der vorliegenden Erfindung ist das mit dem äußeren Zentralrad des auf der Nebenwelle angeordneten Planetenradsatzes zur Drehmomentenübertragung auf die Abtriebswelle in Wirkverbindung bringbare, auf der als Vollwelle ausgebildeten ersten Eingangswelle befindliche Zahnrad das Zahnrad für den 5. Gang.

Nach einem weiteren Ausgestaltungsmerkmal der vorliegenden Erfindung ist, wie bereits angedeutet, vorgesehen, daß das mit dem äußeren Zentralrad des auf der Nebenwelle angeordneten Planetenradsatzes zur Drehmomentenübertragung auf die Abtriebswelle in Wirkverbindung bringbare, auf der als Vollwelle ausgebildeten ersten Eingangswelle befindliche Zahnrad als Losrad ausgebildet ist, welches wie gesehen zur Drehmomentenübertragung für den Rückwärtsgang dient.

Zweckmäßig ist es nach einem weiteren Ausgestaltungsmerkmal der vorliegenden Erfindung außerdem, daß das zur Drehmomentenübertragung auf die Nebenwelle mit dem auf der Nebenwelle befindlichen Zahnrad in Wirkverbindung bringbare, auf der als Hohlwelle ausgebildeten zweiten Eingangswelle befindliche Zahnrad als Festrad ausgebildet ist. In ähnlicher Weise empfiehlt sich nach einem weiteren Ausgestaltungsmerkmal der vorliegenden Erfindung, daß das mit dem äußeren Zentralrad des auf der Nebenwelle angeordneten Planetenradsatzes zur Drehmomentenübertragung auf die Abtriebswelle in Wirkverbindung bringbare, auf der als Vollwelle ausgebildeten ersten Eingangswelle befindliche Zahnrad als Festrad ausgebildet ist.

Nach einem weiteren bevorzugten Ausgestaltungsmerkmal der vorliegenden Erfindung ist vorgesehen, daß die Schaltung des Rückwärtsganges über den Steg des Planetenradsatzes auf der Nebenwelle durch eine formschlüssige Verbindung dieses Steges des Planetenradsatzes mit dem Gehäuse erfolgt. Auf diese Weise wird eine Rotation des Steges des Planetenradsatzes unterbunden. Es empfiehlt sich dabei, daß die formschlüssige Verbindung des Steges des Planetenradsatzes mit dem Gehäuse synchronisiert erfolgt.

Es empfiehlt sich nach einem weiteren Ausgestaltungsmerkmal der vorliegenden Erfindung zur Realisierung einer besonders kompakten Bauweise, daß für die erste und fünfte, die dritte und sechste sowie für die vierte und zweite Gangstufe jeweils eine gemeinsame Schiebemuffe vorgesehen ist, welche die genannten Gänge wahlweise schaltet.

Nach einem letzten Merkmal der vorliegenden Erfindung ist vorgesehen, daß das äußere Zentralrad des auf der Nebenwelle angeordneten Planetenradsatzes beidseitig verzahnt ausgebildet ist. Über den dieses beidseitig verzahnte äußere Zentralrad aufweisenden Planetenradsatz wird wie gesehen neben der Übersetzung eine Drehrichtungsänderung erzeugt.

Die Erfindung ist in den Figuren der Zeichnung in einem Ausführungsbeispiel dargestellt. Es zeigen:
- Fig. 1: eine stark vereinfachte, schematische Ansicht eines erfindungsgemäßen automatisierten Zahnradgetriebes, insbesondere Doppelkupplungsgetriebes für ein Fahrzeug, insbesondere für ein Kraftfahrzeug,
- Fig. 2: die Ansicht des erfindungsgemäßen automatisierten Zahnradgetriebes gemäß Fig. 1 mit eingetragenen Drehrichtungen der für die Übertragung des Rückwärtsganges relevanten Zahnräder,
- Fig. 3: die Ansicht des erfindungsgemäßen automatisierten Zahnradgetriebes gemäß Fig. 1 in einer vereinfachten schematischen Schnittdarstellung (mit einer Darstellung der Wälzkreisdurchmesser).

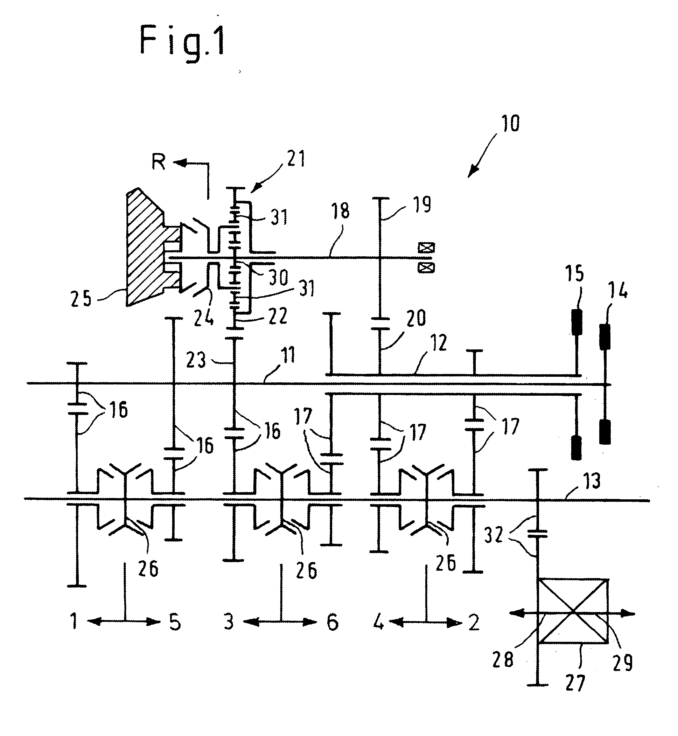

Das erfindungsgemäße automatisierte Zahnradgetriebe ist generell mit 10 bezeichnet. Das automatisierte Zahnradgetriebe 10 ist insbesondere vorgesehen als Doppelkupplungsgetriebe für ein Fahrzeug, insbesondere für ein Kraftfahrzeug, wobei dieses automatisierte Zahnradgetriebe 10 versehen ist mit zwei im wesentlichen konzentrisch zueinander angeordneten, mit 11 bzw. 12 bezeichneten Eingangswellen und einer mit 13 bezeichneten Abtriebswelle, wobei die erste Eingangswelle 11 als Vollwelle und die zweite Eingangswelle 12 als Hohlwelle ausgebildet ist, die erste Eingangswelle 11 ist dabei bereichsweise innerhalb der zweiten Eingangswelle 12 angeordnet, siehe dazu z.B. die Darstellung der Fig. 1 der Zeichnung. Die erste 11 und die zweite Eingangswelle 12 sind weiterhin jeweils über eine erste 14 und eine zweite Kupplung 15 mit einer hier nicht dargestellten Antriebswelle verbindbar und die erste Eingangswelle 11 ist zumindest über ein erstes Zahnradpaar 16 mit der Abtriebswelle 13 und die zweite Eingangswelle 12 ist zumindest über ein zweites Zahnradpaar 17 mit der Abtriebswelle 13 in Wirkverbindung bringbar. In diesem Falle ist die erste Eingangswelle 11 über drei Zahnradpaare 16 für die Gangstufen 1, 3 und 5 mit der Abtriebswelle 13 in Wirkverbindung bringbar, während die zweite Eingangswelle 12 über drei Zahnradpaare 17 für die Gangstufen 2, 4 und 6 mit der Abtriebswelle 13 in Wirkverbindung bringbar ist. Es ist außerdem bei dem erfindungsgemäßen automatisierten Zahnradgetriebe 10 zur Realisierung eines Rückwärtsganges eine separate Nebenwelle 18 vorgesehen.

Das erfindungsgemäße automatisierte Zahnradgetriebe 10 zeichnet sich nun dadurch aus, siehe dazu wieder insbesondere die Darstellung gemäß der Fig. 1 der Zeichnung, daß zur Drehmomentenübertragung auf die Nebenwelle 18 ein auf dieser zur Realisierung eines Rückwärtsganges vorgesehenen separaten Nebenwelle 18 befindliches Zahnrad 19 mit einem auf der als Hohlwelle ausgebildeten zweiten Eingangswelle 12 befindlichen Zahnrad 20 in Wirkverbindung bringbar ist, daß zur Drehrichtungsumkehr für den Rückwärtsgang auf der Nebenwelle 18 ein Planetenradsatz 21 angeordnet ist, daß das äußere Zentralrad 22 des auf der Nebenwelle 18 angeordneten Planetenradsatzes 21 zur Drehmomentenübertragung auf die Abtriebswelle 13 mit einem auf der als Vollwelle ausgebildeten ersten Eingangswelle 11 befindlichen Zahnrad 23 in Wirkverbindung bringbar ist, und daß die Schaltung des Rückwärtsganges über den Steg 24 des Planetenradsatzes 21 auf der Nebenwelle 18 erfolgt. Durch diese Ausbildung ergeben sich gegenüber den bekannten Ausführungsformen von automatisierten Zahnradgetrieben deutliche Vorteile. Es wird nämlich mit dem erfindungsgemäßen automatisierten Zahnradgetriebe 10 erstmalig mit einfachen Mitteln die Möglichkeit geschaffen, den Rückwärtsgang derart in ein Getriebe zu integrieren, daß es zu keinen Überschneidungen der einzelnen Gangräder mehr kommt, wobei die erfindungsgemäße Anordnung auch hinsichtlich der Übersetzung der einzelnen Gangräder und hinsichtlich des Getriebebauraumes den Anforderungen vollkommen genügt bzw. verbessert ist. Es kann dadurch, daß der Rückwärtsgang nur mit den Eingangswellen 11,12 kämmt, dieser Rückwärtsgang auf einem Winkel mit annähernd 180° um die Eingangswellen 11,12 herum positioniert werden. Das bedeutet, daß nur ein Achsabstand (Rückwärtsgang ⇔ Eingangswelle) die Übersetzung der beiden Rückwärtsgangräder mit bestimmt, welche z.B. bevorzugt mit den Festrad des 3. und 4. Ganges wälzen. Dies hat auch insbesondere den Vorteil weniger Abhängigkeiten zwischen Übersetzung, Achsabstand und Wälzkreisradius. Die erfindungsgemäße Anordnung ist also insbesondere hinsichtlich ihrer Integrierbarkeit in das Getriebe verbessert worden, weiterhin ist diese aber auch hinsichtlich der Lebensdauer und der Zuverlässigkeit verbessert worden und außerdem einfach und kostengünstig herstellbar.

Bei dem in den Figuren der Zeichnung dargestellten Ausführungsbeispiel des erfindungsgemäßen automatisierten Zahnradgetriebes 10 ist das auf der Nebenwelle 18 befindliche, mit dem auf der als Hohlwelle ausgebildeten zweiten Eingangswelle 12 befindlichen Zahnrad 20 in Wirkverbindung bringbare Zahnrad 19 als Festrad ausgebildet. Bei der dargestellten Ausführungsform ist außerdem, siehe z.B. Fig. 1, das zur Drehmomentenübertragung auf die Nebenwelle 18 mit dem auf der Nebenwelle 18 befindlichen Zahnrad 19 in Wirkverbindung bringbare, auf der als Hohlwelle ausgebildeten zweiten Eingangswelle 12 befindliche Zahnrad 20 das Zahnrad für den 4. Gang. Es wird also hier über den 4. Gang der Eingangs-Hohlwelle das Drehmoment zum Rückwärtsfahren auf das festsitzende Gangrad des Rückwärtsganges auf der Nebenwelle 18 übertragen. Über den auf der Nebenwelle 18 angeordneten Planetenradsatz 21 erfolgt dann eine Drehrichtungsumkehr sowie die notwendige Übersetzung.

Bei einer alternativen Lösung für das erfindungsgemäße automatisierte Zahnradgetriebe 10 kann das zur Drehmomentenübertragung auf die Nebenwelle 18 mit dem auf der Nebenwelle 18 befindlichen Zahnrad 19 in Wirkverbindung bringbare, auf der als Hohlwelle ausgebildeten zweiten Eingangswelle 12 befindliche Zahnrad 20 das Zahnrad für den 6. Gang sein. Dieser Fall ist jedoch in den Figuren der Zeichnung nicht gezeigt.

Bei dem in den Figuren der Zeichnung dargestellten Ausführungsbeispiel des erfindungsgemäßen automatisierten Zahnradgetriebes 10 ist außerdem das mit dem äußeren Zentralrad 22 des auf der Nebenwelle 18 angeordneten Planetenradsatzes 21 zur Drehmomentenübertragung auf die Abtriebswelle 13 in Wirkverbindung bringbare, auf der als Vollwelle ausgebildeten ersten Eingangswelle 11 befindliche Zahnrad 23 das Zahnrad für den 3. Gang. Hier wird also über das äußere Zentralrad 22 und über das 3. Gangrad der Eingangsvollwelle des geschalteten 3. Ganges das Drehmoment auf die Ausgangswelle übertragen. Dabei wird durch die geöffnete Kupplung das 3. Gangrad der Eingangsvollwelle zu einem Losrad, welches eben zur Drehmomentenübertragung für den Rückwärtsgang dient. Dabei muß der 3. Gang zum Übertragen des Drehmomentes geschaltet sein.

Bei einer alternativen Lösung für das erfindungsgemäße automatisierte Zahnradgetriebe 10 kann das mit dem äußeren Zentralrad 22 des auf der Nebenwelle 18 angeordneten Planetenradsatzes 21 zur Drehmomentenübertragung auf die Abtriebswelle 13 in Wirkverbindung bringbare, auf der als Vollwelle ausgebildeten ersten Eingangswelle 11 befindliche Zahnrad 23 das Zahnrad für den 5. Gang sein. Dieser Fall ist aber wiederum ebenfalls in den Figuren der Zeichnung nicht gezeigt.

Wie erwähnt ist also bei dem dargestellten Ausführungsbeispiel des erfindungsgemäßen automatisierten Zahnradgetriebes 10 das mit dem äußeren Zentralrad 22 des auf der Nebenwelle 18 angeordneten Planetenradsatzes 21 zur Drehmomentenübertragung auf die Abtriebswelle 13 in Wirkverbindung bringbare, auf der als Vollwelle ausgebildeten ersten Eingangswelle 11 befindliche Zahnrad 23 als Losrad ausgebildet. Dieses dient zur Drehmomentenübertragung für den Rückwärtsgang.

Es ist außerdem bei dem dargestellten Ausführungsbeispiel das zur Drehmomentenübertragung auf die Nebenwelle 18 mit dem auf der Nebenwelle 18 befindlichen Zahnrad 19 in Wirkverbindung bringbare, auf der als Hohlwelle ausgebildeten zweiten Eingangswelle 12 befindliche Zahnrad 20 als Festrad ausgebildet. Weiterhin ist das mit dem äußeren Zentralrad 22 des auf der Nebenwelle 18 angeordneten Planetenradsatzes 21 zur Drehmomentenübertragung auf die Abtriebswelle 13 in Wirkverbindung bringbare, auf der als Vollwelle ausgebildeten ersten Eingangswelle 11 befindliche Zahnrad 23 als Festrad ausgebildet, wobei wie erwähnt, im Falle einer geöffneten Kupplung 14 der Eingangsvollwelle das 3. Gang- Festrad zu einem Losrad wird.

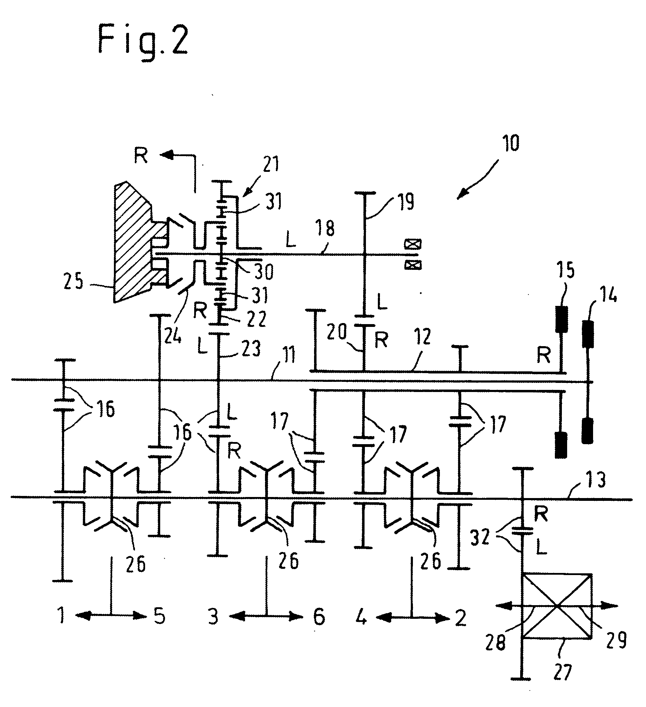

Die Schaltung des Rückwärtsganges über den Steg 24 des Planetenradsatzes 21 auf der Nebenwelle 18 erfolgt bei dem dargestellten Ausführungsbeispiel durch eine formschlüssige Verbindung dieses Steges 24 des Planetenradsatzes 21 mit dem Gehäuse 25. Es wird dabei durch den feststehenden Steg 24 des Planetenradsatzes 21 in an sich bekannter Weise eine Drehrichtungsumkehr der Bewegung der Nebenwelle 18 über das Sonnenrad 30 des Planetenradsatzes 21 über die feststehenden, sich gegensinnig zum Sonnenrad 30 drehenden Planetenräder 31 an dem Zentralrad 22 selbst erreicht. Es wird dazu insbesondere auf die Fig. 2 der Zeichnung mit den eingetragenen Drehrichtungen der für die Übertragung des Rückwärtsganges relevanten Zahnräder verwiesen, wobei hier mit "L" die Linksdrehung und mit "R" die Rechtsdrehung vom Motor zur Kupplung hin gesehen bei geschaltetem Rückwärtsgang bezeichnet ist. Dabei wird also die Linksdrehung der Nebenwelle 18 über das Sonnenrad 30 des Planetenradsatzes 21 durch den feststehenden Steg 24 des Planetenradsatzes 21 über die feststehenden, sich gegensinnig zum Sonnenrad 30 drehenden Planetenräder 31 in eine Rechtsdrehung des äußeren Zentralrades 22 des auf der Nebenwelle 18 angeordneten Planetenradsatzes 21 umgekehrt. Die formschlüssige Verbindung des Steges 24 des Planetenradsatzes 21 mit dem Gehäuse 25 erfolgt dabei in bevorzugter Weise synchronisiert.

Zur Realisierung einer besonders kompakten Bauweise ist im weiteren für die erste und fünfte, die dritte und sechste sowie für die vierte und zweite Gangstufe jeweils eine gemeinsame Schiebemuffe 26 vorgesehen, welche die genannten Gänge wahlweise schaltet. Es sind dazu in den Figuren 1 und 2 der Zeichnung diese drei Schiebemuffen 26 schematisch dargestellt, es soll dabei durch die jeweilige Schrägstellung an diesen Schiebemuffen 26 die Synchronisierung der jeweiligen Gangstufen angedeutet werden.

Das äußere Zentralrad 22 des auf der Nebenwelle 18 angeordneten Planetenradsatzes 21 ist außerdem beidseitig verzahnt ausgebildet, wobei wie gesehen der dieses beidseitig verzahnte äußere Zentralrad 22 aufweisende Planetenradsatz 21 neben der Übersetzung eine Drehrichtungsänderung erzeugt.

Bei der Darstellung der Fig. 2 der Zeichnung mit den eingetragenen Drehrichtungen der für die Übertragung des Rückwärtsganges relevanten Zahnräder ist die als Hohlwelle ausgebildete zweite Eingangswelle 12 rechtsdrehend dargestellt, ebenso wie das auf dieser Eingangswelle 12 befindliche, als Festrad ausgebildete Zahnrad 20. Das Zahnrad 20 kämmt mit dem auf der Nebenwelle 18 befindlichen, ebenfalls als Festrad ausgebildeten Zahnrad 19, so daß dieses sich gegensinnig dazu dreht, also linksdrehend ist. Die Nebenwelle 18 ist demnach ebenfalls linksdrehend, wobei sich durch den Planetenradsatz 21 wie oben beschrieben eine Drehrichtungsumkehr in Bezug auf dessen äußeres Zentralrad 22 ergibt, dieses ist also rechtsdrehend. Das äußeres Zentralrad 22 wiederum kämmt mit dem Zahnrad 23 auf der als Vollwelle ausgebildeten ersten Eingangswelle 11, d.h. das dieses Zahnrad 23 linksdrehend ist. Da dieses Zahnrad 23 auf der ersten Eingangswelle 11 als Festrad ausgebildet ist und gleichzeitig im Falle einer geöffneten Kupplung 14 der Eingangsvollwelle das 3.

Gang- Festrad zu einem Losrad wird, dreht sich die erste Eingangswelle 11 bei geschaltetem Rückwärtsgang zusammen mit den Zahnrad 23 ebenfalls linksdrehend. Das Zahnrad 23 kämmt mit dem entsprechenden Gegenrad der 3. Gangstufe auf der Abtriebswelle 13, das hier allgemein mit 16 bezeichnet ist, wobei sich dieses Gegenrad gegensinnig dazu dreht, also rechtsdrehend ist. Über dieses Gegenrad wird also das Drehmoment bei geschaltetem Rückwärtsgang auf die Abtriebswelle 13 übertragen. Im weiteren wird über ein weiteres Zahnradpaar 32, das auf der Abtriebswelle 13 einerseits und an einem Differentialgetriebe 27 andererseits angeordnet ist, eine weitere Drehrichtungsumkehr durchgeführt, d.h. das am Differentialgetriebe 27 angeordnete Zahnrad dieses Zahnradpaares 32 ist linksdrehend. Ausgehend von diesem Differentialgetriebe 27 erstrecken sich die mit 28 und 29 bezeichneten Antriebswellen zu den nicht dargestellten Antriebsrädern.

Im übrigen kämmen bei dem erfindungsgemäßen automatisierten Zahnradgetriebe10 bei nicht geschaltetem Rückwärtsgang in an sich bekannter Weise die drei Zahnräder 16 der ersten Eingangswelle 11 bzw. die drei Zahnräder 17 der zweiten Eingangswelle 12 mit den auf der Abtriebswelle 13 entsprechend jeweils angeordneten drei Gegenzahnrädern 16 für die Gangstufen 1, 3 und 5 bzw. drei Gegenzahnrädern 17 für die Gangstufen 2, 4 und 6.

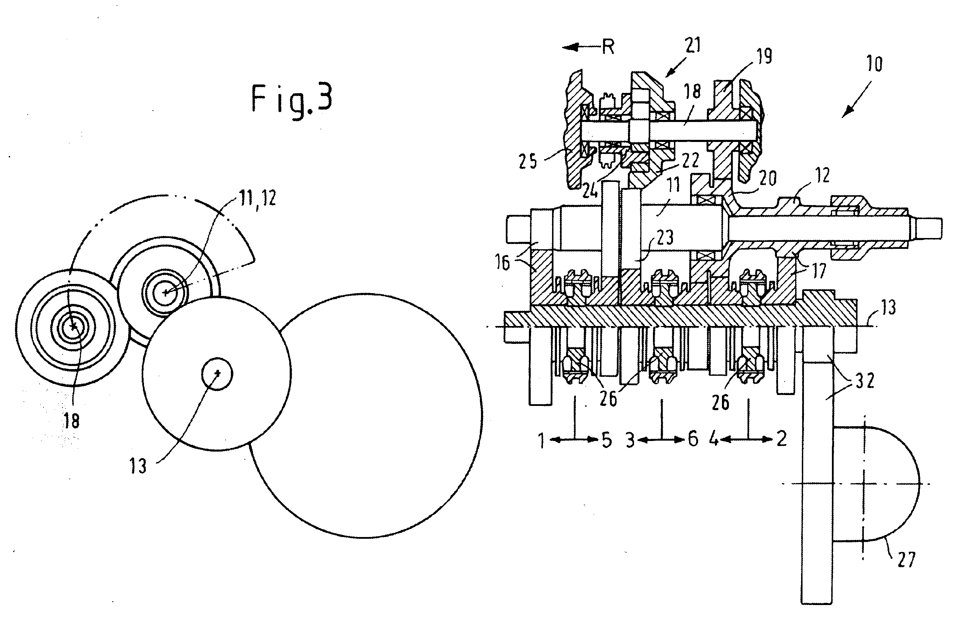

In der Fig. 3 der Zeichnung ist noch ergänzend zur Verdeutlichung das erfindungsgemäße automatisierte Zahnradgetriebe 10 in einer vereinfachten schematischen Schnittdarstellung (mit einer Darstellung der Wälzkreisdurchmesser) dargestellt. In dieser Fig. 3 sind im wesentlichen erkennbar die beiden Eingangswellen 11,12 mit den jeweils drei Zahnrädern 16 für die Gangstufen 1, 3 und 5 auf der ersten Eingangswelle 11 und den drei Zahnrädern 17 für die Gangstufen 2, 4 und 6 auf der zweiten Eingangswelle 12, sowie die Abtriebswelle 13 mit den entsprechenden drei Gegenzahnrädern 16 für die Gangstufen 1, 3 und 5 bzw. drei Gegenzahnrädern 17 für die Gangstufen 2, 4 und 6. Weiterhin erkennbar sind die drei Schiebemuffen 26 auf der Abtriebswelle 13 sowie das Zahnradpaar 32 zur Übertragung des Drehmomentes auf das Differentialgetriebe 27. Oberhalb der beiden Eingangswellen 11,12 ist dargestellt die Nebenwelle 18 zur Realisierung des Rückwärtsganges mit dem Zahnrad 19, das mit dem auf der als Hohlwelle ausgebildeten zweiten Eingangswelle 12 befindlichen Zahnrad 20 für die vierte Gangstufe kämmt, der zur Drehrichtungsumkehr für den Rückwärtsgang auf der Nebenwelle 18 angeordnete Planetenradsatz 21, dessen Steg 24 formschlüssig mit dem Gehäuse 25 verbunden ist, sowie dessen äußeres Zentralrad 22, das mit dem auf der als Vollwelle ausgebildeten ersten Eingangswelle 11 befindlichen Zahnrad 23 für die dritte Gangstufe zur Übertragung des Drehmomentes auf die Abtriebswelle 13 bei geschaltetem Rückwärtsgang zusammenwirkt. Die Darstellung der Wälzkreisdurchmesser gemäß Fig. 3 veranschaulicht dazu insbesondere nochmals die Zuordnung der einzelnen Eingangswellen 11,12, der Abtriebswelle 13 und der Nebenwelle 18 für den Rückwärtsgang sowie das Ineinandergreifen der einzelnen Zahnräder. Die Wälzkreise dieser Zahnräder sind dazu hier im einzelnen nicht separat bezeichnet.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann das erfindungsgemäße automatisierte Zahnradgetriebe10 insbesondere einen anderen Aufbau z.B. mit einer abweichenden Anzahl von Gängen (z.B. 5 oder 4 Gänge) aufweisen, weiterhin denkbar sind unterschiedliche Anordnungen der Eingangswellen 11,12, der Abtriebswelle 13 sowie der auf diesen befindlichen Zahnräder sowie auch beispielsweise der Nebenwelle 18 mit dem Planetenradsatz 21.

## Patentansprüche

1. Automatisiertes Zahnradgetriebe (10), insbesondere Doppelkupplungsgetriebe für ein Fahrzeug, insbesondere für ein Kraftfahrzeug, mit zwei im wesentlichen konzentrisch zueinander angeordneten Eingangswellen (11,12) und einer Abtriebswelle (13), wobei die erste Eingangswelle (11) als Vollwelle und die zweite Eingangswelle (12) als Hohlwelle ausgebildet ist und die erste Eingangswelle (11) bereichsweise innerhalb der zweiten Eingangswelle (12) angeordnet ist, wobei die erste (11) und die zweite Eingangswelle (12) jeweils über eine erste (14) und eine zweite Kupplung (15) mit einer Antriebswelle verbindbar sind und die erste Eingangswelle (11) zumindest über ein erstes Zahnradpaar (16) mit der Abtriebswelle (13) und die zweite Eingangswelle (12) zumindest über ein zweites Zahnradpaar (17) mit der Abtriebswelle (13) in Wirkverbindung bringbar ist, und wobei zur Realisierung eines Rückwärtsganges eine separate Nebenwelle (18) vorgesehen ist,
**dadurch gekennzeichnet, daß**
zur Drehmomentenübertragung auf die Nebenwelle (18) ein auf dieser zur Realisierung eines Rückwärtsganges vorgesehenen separaten Nebenwelle (18) befindliches Zahnrad (19) mit einem auf der als Hohlwelle ausgebildeten zweiten Eingangswelle (12) befindlichen Zahnrad (20) in Wirkverbindung bringbar ist, daß zur Drehrichtungsumkehr für den Rückwärtsgang auf der Nebenwelle (18) ein Planetenradsatz (21) angeordnet ist, daß das äußere Zentralrad (22) des auf der Nebenwelle (18) angeordneten Planetenradsatzes (21) zur Drehmomentenübertragung auf die Abtriebswelle (13) mit einem auf der als Vollwelle ausgebildeten ersten Eingangswelle (11) befindlichen Zahnrad (23) in Wirkverbindung bringbar ist, und daß die Schaltung des Rückwärtsganges über den Steg (24) des Planetenradsatzes (21) auf der Nebenwelle (18) erfolgt.

2. Automatisiertes Zahnradgetriebe nach Anspruch 1,
**dadurch gekennzeichnet, daß**
das auf der Nebenwelle (18) befindliche, mit dem auf der als Hohlwelle ausgebildeten zweiten Eingangswelle (12) befindlichen Zahnrad (20) in Wirkverbindung bringbare Zahnrad (19) als Festrad ausgebildet ist.

3. Automatisiertes Zahnradgetriebe nach Anspruch 1 oder 2,
**dadurch gekennzeichnet, daß**
das zur Drehmomentenübertragung auf die Nebenwelle (18) mit dem auf der Nebenwelle (18) befindlichen Zahnrad (19) in Wirkverbindung bringbare, auf der als Hohlwelle ausgebildeten zweiten Eingangswelle (12) befindliche Zahnrad (20) das Zahnrad für den 4. Gang ist.

4. Automatisiertes Zahnradgetriebe nach Anspruch 1 oder 2,
**dadurch gekennzeichnet, daß**
das zur Drehmomentenübertragung auf die Nebenwelle (18) mit dem auf der Nebenwelle (18) befindlichen Zahnrad (19) in Wirkverbindung bringbare, auf der als Hohlwelle ausgebildeten zweiten Eingangswelle (12) befindliche Zahnrad (20) das Zahnrad für den 6. Gang ist.

5. Automatisiertes Zahnradgetriebe nach einem der Ansprüche 1 bis 4,
**dadurch gekennzeichnet, daß**
das mit dem äußeren Zentralrad (22) des auf der Nebenwelle (18) angeordneten Planetenradsatzes (21) zur Drehmomentenübertragung auf die Abtriebswelle (13) in Wirkverbindung bringbare, auf der als Vollwelle ausgebildeten ersten Eingangswelle (11) befindliche Zahnrad (23) das Zahnrad für den 3. Gang ist.

6. Automatisiertes Zahnradgetriebe nach einem der Ansprüche 1 bis 4,
**dadurch gekennzeichnet, daß**
das mit dem äußeren Zentralrad (22) des auf der Nebenwelle (18) angeordneten Planetenradsatzes (21) zur Drehmomentenübertragung auf die Abtriebswelle (13) in Wirkverbindung bringbare, auf der als Vollwelle ausgebildeten ersten Eingangswelle (11) befindliche Zahnrad (23) das Zahnrad für den 5. Gang ist.

7. Automatisiertes Zahnradgetriebe nach Anpruch 5 oder 6,
**dadurch gekennzeichnet, daß**
das mit dem äußeren Zentralrad (22) des auf der Nebenwelle (18) angeordneten Planetenradsatzes (21) zur Drehmomentenübertragung auf die Abtriebswelle (13) in Wirkverbindung bringbare, auf der als Vollwelle ausgebildeten ersten Eingangswelle (11) befindliche Zahnrad (23) als Losrad ausgebildet ist.

8. Automatisiertes Zahnradgetriebe nach Anspruch 3 oder 4,
**dadurch gekennzeichnet, daß**
das zur Drehmomentenübertragung auf die Nebenwelle (18) mit dem auf der Nebenwelle (18) befindlichen Zahnrad (19) in Wirkverbindung bringbare, auf der als Hohlwelle ausgebildeten zweiten Eingangswelle (12) befindliche Zahnrad (20) als Festrad ausgebildet ist.

9. Automatisiertes Zahnradgetriebe nach einem der Ansprüche 5 bis 7,
**dadurch gekennzeichnet, daß**
das mit dem äußeren Zentralrad (22) des auf der Nebenwelle (18) angeordneten Planetenradsatzes (21) zur Drehmomentenübertragung auf die Abtriebswelle (13) in Wirkverbindung bringbare, auf der als Vollwelle ausgebildeten ersten Eingangswelle (11) befindliche Zahnrad (23) als Festrad ausgebildet ist.

10. Automatisiertes Zahnradgetriebe nach einem der Ansprüche 1 bis 9,
**dadurch gekennzeichnet, daß**
die Schaltung des Rückwärtsganges über den Steg (24) des Planetenradsatzes (21) auf der Nebenwelle (18) durch eine formschlüssige Verbindung dieses Steges (24) des Planetenradsatzes (21) mit dem Gehäuse (25) erfolgt.

11. Automatisiertes Zahnradgetriebe nach Anspruch 10,
**dadurch gekennzeichnet, daß**
die formschlüssige Verbindung des Steges (24) des Planetenradsatzes (21) mit dem Gehäuse (25) synchronisiert erfolgt.

12. Automatisiertes Zahnradgetriebe nach einem der Ansprüche 1 bis 11,
**dadurch gekennzeichnet, daß**
für die erste und fünfte, die dritte und sechste sowie für die vierte und zweite Gangstufe jeweils eine gemeinsame Schiebemuffe (26) vorgesehen ist, welche die genannten Gänge wahlweise schaltet.

13. Automatisiertes Zahnradgetriebe nach einem der Ansprüche 1 bis 12,
**dadurch gekennzeichnet, daß**
das äußere Zentralrad (22) des auf der Nebenwelle (18) angeordneten Planetenradsatzes (21) beidseitig verzahnt ausgebildet ist.

## Claims

1. Automated gearwheel transmission (10), in particular dual-clutch transmission for a vehicle, in particular for a motor vehicle, having two input shafts (11, 12) which are arranged substantially concentrically with respect to one another and having a drive output shaft (13), with the first input shaft (11) being embodied as a solid shaft and the second input shaft (12) being embodied as a hollow shaft, and the first input shaft (11) being arranged within the second input shaft (12) in regions, with it being possible for the first (11) and the second input shaft (12) in each case to be connected to a drive input shaft by means of a first (14) and a second clutch (15), and for the first input shaft (11) to be operatively connected to the drive output shaft (13) at least by means of a first gearwheel pair (16) and for the second input shaft (12) to be operatively connected to the drive output shaft (13) at least by means of a second gearwheel pair (17), and with a separate auxiliary shaft (18) being provided for realizing a reverse gear,
**characterized in that**,
for torque transmission to the auxiliary shaft (18), a gearwheel (19) which is situated on said separate auxiliary shaft (18) provided for realizing a reverse gear can be operatively connected to a gearwheel (20) situated on the second input shaft (12) which is embodied as a hollow shaft, **in that**, for the rotational direction reversal for the reverse gear, a planetary gear set (21) is arranged on the auxiliary shaft (18), **in that** the outer central gear (22) of the planetary gear set (21) arranged on the auxiliary shaft (18) can, for torque transmission to the drive output shaft (13), be operatively connected to a gearwheel (23) situated on the first input shaft (11) which is embodied as a solid shaft, and **in that** the shifting of the reverse gear takes place by means of the web (24) of the planetary gear set (21) on the auxiliary shaft (18).

2. Automated gearwheel transmission according to Claim 1,
**characterized in that**
the gearwheel (19), which is situated on the auxiliary shaft (18) and which can be operatively connected to the gearwheel (20) situated on the second input shaft (12) which is embodied as a hollow shaft, is embodied as a fixed gear.

3. Automated gearwheel transmission according to Claim 1 or 2,
**characterized in that**
the gearwheel (20), which, for torque transmission to the auxiliary shaft (18), can be operatively connected to the gearwheel (19) situated on the auxiliary shaft (18) and which is situated on the second input shaft (12) which is embodied as a hollow shaft, is the gearwheel for 4th gear.

4. Automated gearwheel transmission according to Claim 1 or 2,
**characterized in that**
the gearwheel (20), which, for torque transmission to the auxiliary shaft (18), can be operatively connected to the gearwheel (19) situated on the auxiliary shaft (18) and which is situated on the second input shaft (12) which is embodied as a hollow shaft, is the gearwheel for 6th gear.

5. Automated gearwheel transmission according to one of Claims 1 to 4,
**characterized in that**
the gearwheel (23), which, for torque transmission to the drive output shaft (13), can be operatively connected to the outer central gear (22) of the planetary gear set (21) arranged on the auxiliary shaft (18) and which is situated on the first input shaft (11) which is embodied as a solid shaft, is the gearwheel for 3rd gear.

6. Automated gearwheel transmission according to one of Claims 1 to 4,
**characterized in that**
the gearwheel (23), which, for torque transmission to the drive output shaft (13), can be operatively connected to the outer central gear (22) of the planetary gear set (21) arranged on the auxiliary shaft (18) and which is situated on the first input shaft (11) which is embodied as a solid shaft, is the gearwheel for 5th gear.

7. Automated gearwheel transmission according to Claim 5 or 6,
**characterized in that**
the gearwheel (23), which, for torque transmission to the drive output shaft (13), can be operatively connected to the outer central gear (22) of the planetary gear set (21) arranged on the auxiliary shaft (18) and which is situated on the first input shaft (11) which is embodied as a solid shaft, is embodied as a loose gear.

8. Automated gearwheel transmission according to Claim 3 or 4,
**characterized in that**
the gearwheel (20), which, for torque transmission to the auxiliary shaft (18), can be operatively connected to the gearwheel (19) situated on the auxiliary shaft (18) and which is situated on the second input shaft (12) which is embodied as a hollow shaft, is embodied as a fixed gear.

9. Automated gearwheel transmission according to one of Claims 5 to 7,
**characterized in that**
the gearwheel (23), which, for torque transmission to the drive output shaft (13), can be operatively connected to the outer central gear (22) of the planetary gear set (21) arranged on the auxiliary shaft (18) and which is situated on the first input shaft (11) which is embodied as a solid shaft, is embodied as a fixed gear.

10. Automated gearwheel transmission according to one of Claims 1 to 9,
**characterized in that**
the shifting of the reverse gear by means of the web (24) of the planetary gear set (21) on the auxiliary shaft (18) takes place by means of a form-fitting connection of said web (24) of the planetary gear set (21) to the housing (25).

11. Automated gearwheel transmission according to Claim 10,
**characterized in that**
the form-fitting connection of the web (24) of the planetary gear set (21) to the housing (25) takes place in a synchronized fashion.

12. Automated gearwheel transmission according to one of Claims 1 to 11,
**characterized in that**,
for the first and fifth, the third and sixth and for the fourth and second gear stages, in each case one common sliding sleeve (26) is provided which selectively shifts said gears.

13. Automated gearwheel transmission according to one of Claims 1 to 12,
**characterized in that**
the outer central gear (22) of the planetary gear set (21) arranged on the auxiliary shaft (18) is formed so as to be toothed on both sides.

## Revendications

1. Transmission automatisée à engrenages (10), notamment transmission à double embrayage pour un véhicule, notamment un véhicule automobile, comprenant deux arbres d'entrée (11, 12) disposés sensiblement concentriquement l'un par rapport à l'autre et un arbre de sortie (13), le premier arbre d'entrée (11) étant réalisé sous forme d'arbre plein et le deuxième arbre d'entrée (12) étant réalisé sous forme d'arbre creux et le premier arbre d'entrée (11) étant disposé en partie à l'intérieur du deuxième arbre d'entrée (12), le premier (11) et le deuxième (12) arbre d'entrée pouvant être connectés à chaque fois par le biais d'un premier (14) et d'un deuxième (15) embrayage à un arbre d'entraînement et le premier arbre d'entrée (11) pouvant être amené en liaison fonctionnelle avec l'arbre de sortie (13) au moins par le biais d'une première paire de roues dentées (16) et le deuxième arbre d'entrée (12) pouvant être amené en liaison fonctionnelle avec l'arbre de sortie (13) au moins par le biais d'une deuxième paire de roues dentées (17), un arbre secondaire séparé (18) étant prévu pour réaliser une marche arrière,
**caractérisée en ce que**
pour le transfert de couple à l'arbre secondaire (18), une roue dentée (19) située sur cet arbre secondaire séparé (18) prévu pour réaliser une marche arrière peut être amenée en liaison fonctionnelle avec une roue dentée (20) se trouvant sur le deuxième arbre d'entrée (12) réalisé en tant qu'arbre creux, **en ce que** pour inverser le sens de rotation pour la marche arrière, on dispose sur l'arbre secondaire (18) un train planétaire (21), **en ce que** la roue centrale extérieure (22) du train planétaire (21) disposé sur l'arbre secondaire (18) peut être amenée en liaison fonctionnelle pour le transfert de couple à l'arbre de sortie (13) avec une roue dentée (23) située sur le premier arbre d'entrée (11) réalisé sous forme d'arbre plein et **en ce que** le passage à la marche arrière s'effectue par le biais du porte-satellites (24) du train planétaire (21) sur l'arbre secondaire (18).

2. Transmission automatisée à engrenages selon la revendication 1,
**caractérisée en ce que**
la roue dentée (19) située sur l'arbre secondaire (18), pouvant être amenée en liaison fonctionnelle avec la roue dentée (20) se trouvant sur le deuxième arbre d'entrée (12) réalisé sous forme d'arbre creux, est réalisée sous forme de roue fixe.

3. Transmission automatisée à engrenages selon l'une quelconque des revendications 1 ou 2,
**caractérisée en ce que**
la roue dentée (20) située sur le deuxième arbre d'entrée (12) réalisé sous forme d'arbre creux, pouvant être amenée en liaison fonctionnelle avec la roue dentée (19) se trouvant sur l'arbre secondaire (18) pour le transfert de couple à l'arbre secondaire (18), est la roue dentée pour la 4e vitesse.

4. Transmission automatisée à engrenages selon l'une quelconque des revendications 1 ou 2,
**caractérisée en ce que**
la roue dentée (20) située sur le deuxième arbre d'entrée (12) réalisé sous forme d'arbre creux, pouvant être amenée en liaison fonctionnelle avec la roue dentée (19) se trouvant sur l'arbre secondaire (18) pour le transfert de couple à l'arbre secondaire (18), est la roue dentée pour la 6e vitesse.

5. Transmission automatisée à engrenages selon l'une quelconque des revendications 1 à 4,
**caractérisée en ce que**
la roue dentée (23) située sur le premier arbre d'entrée (11) réalisé sous forme d'arbre plein, pouvant être amenée en liaison fonctionnelle avec la roue centrale extérieure (22) du train planétaire (21) se trouvant sur l'arbre secondaire (18) pour le transfert de couple à l'arbre de sortie (13), est la roue dentée pour la 3e vitesse.

6. Transmission automatisée à engrenages selon l'une quelconque des revendications 1 à 4,
**caractérisée en ce que**
la roue dentée (23) située sur le premier arbre d'entrée (11) réalisé sous forme d'arbre plein, pouvant être amenée en liaison fonctionnelle avec la roue centrale extérieure (22) du train planétaire (21) se trouvant sur l'arbre secondaire (18) pour le transfert de couple à l'arbre de sortie (13), est la roue dentée pour la 5e vitesse.

7. Transmission automatisée à engrenages selon l'une quelconque des revendications 5 ou 6,
**caractérisée en ce que**
la roue dentée (23) située sur le premier arbre d'entrée (11) réalisé sous forme d'arbre plein, pouvant être amenée en liaison fonctionnelle avec la roue centrale extérieure (22) du train planétaire (21) se trouvant sur l'arbre secondaire (18) pour le transfert de couple à l'arbre de sortie (13) est réalisée sous forme de roue libre.

8. Transmission automatisée à engrenages selon l'une quelconque des revendications 3 ou 4,
**caractérisée en ce que**
la roue dentée (20) située sur le deuxième arbre d'entrée (12) réalisé sous forme d'arbre creux, pouvant être amenée en liaison fonctionnelle avec la roue dentée (19) se trouvant sur l'arbre secondaire (18) pour le transfert de coupe à l'arbre secondaire (18), est réalisée sous forme de roue fixe.

9. Transmission automatisée à engrenages selon l'une quelconque des revendications 5 à 7,
**caractérisée en ce que**
la roue dentée (23) située sur le premier arbre d'entrée (11) réalisé sous forme d'arbre plein, pouvant être amenée en liaison fonctionnelle avec la roue centrale extérieure (22) du train planétaire (21) se trouvant sur l'arbre secondaire (18) pour le transfert de couple à l'arbre de sortie (13) est réalisée sous forme de roue fixe.

10. Transmission automatisée à engrenages selon l'une quelconque des revendications 1 à 9,
**caractérisée en ce que**
le passage à la marche arrière s'effectue par le biais du porte-satellites (24) du train planétaire (21) sur l'arbre secondaire (18) par une connexion par engagement par coopération de forme de ce porte-satellites (24) du train planétaire (21) au boîtier (25).

11. Transmission automatisée à engrenages selon la revendication 10,
**caractérisée en ce que**
la connexion par engagement par coopération de forme du porte-satellites (24) du train planétaire (21) au boîtier (25) s'effectue de manière synchronisée.

12. Transmission automatisée à engrenages selon l'une quelconque des revendications 1 à 11,
**caractérisée en ce que**
pour la première et la cinquième, la troisième et la sixième, ainsi que pour la quatrième et la deuxième vitesses, on prévoit à chaque fois un manchon coulissant commun (26) qui passe de manière sélective lesdites vitesses.

13. Transmission automatisée à engrenages selon l'une quelconque des revendications 1 à 12,
**caractérisée en ce que**
la roue centrale extérieure (22) du train planétaire (21) se trouvant sur l'arbre secondaire (18) est réalisée de manière dentée des deux côtés.
